# EUROPEAN PATENT APPLICATION

(11) **EP 4 625 974 A1**
(43) Date of publication of application: **01.10.2025**
(21) Application number: 25157793.8
(22) Date of filing: 13.02.2025
(51) Int. Cl.: H04N 13/194, H04N 13/344

(54) **MASK BASED IMAGE COMPOSITION**

(30) Priority: 26.03.2024 US 202418617634
(71) Applicant: Microsoft Technology Licensing, LLC, Redmond, WA 98052 (US)
(72) Inventor: THAUT, Benjamin Markus, Redmond, 98052 (US); BAGAR, Florian, Redmond, 98052 (US); KERN, Norbert clemens, Redmond, 98052 (US)
(74) Representative: CMS Cameron McKenna Nabarro Olswang LLP

(57) **Abstract**

A method, comprising: generating a first layer of an image; generating first depth information for the first layer; generating a second layer of the image; generating second depth information for the second layer; generating dilated depth information, comprising dilating the second depth information; generating a mask using the second depth information; and transmitting the first depth information of the first layer, the dilated depth information of the second layer and the mask.

## Description

### BACKGROUND

In remote rendering, a powerful remote computer renders one or multiple content layers, encodes them, and transmits them via a communications network to a less powerful local head mounted display (HMD). The HMD then decodes the content layers, reprojects them, and composites the layers together. Composition is based on sampling the depth value of each layer, comparing them to one another, and emitting the color associated with the layer closest to the camera for each pixel.

The embodiments described below are not limited to implementations which solve any or all of the disadvantages of known remote rendering technology.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

Layers of an image are rendered at a remote endpoint and transmitted to be composited at a display device such as a head mounted display (HMD). In this way accurately composited images are obtained so as to give a high quality viewing experience even for highly complex 3D images.

In various examples there is provided a method, which may be performed by a remote endpoint such as a remote rendering computer, comprising: generating a first layer of an output image and generating first depth information for the first layer. The method also involves generating a second layer of the output image where the second layer comprises valid pixels and invalid pixels. Second depth information for the second layer is also generated. The method involves generating dilated depth information, comprising dilating the second depth information. A mask is generated using the second depth information and the method transmits the first depth information of the first layer, the dilated depth information of the second layer and the mask, to a head mounted display (HMD) or other display device.

In various examples there is a method performed by a first device, such as an HMD, comprising receiving first depth information for a first layer from a second device. The second device may be a remote rendering computer. The method comprises receiving dilated depth information for a second layer from the second device and receiving a mask for the second layer from the second device. Second depth information is generated for the second layer using the dilated depth information and the mask. An output image is composited from the first and second layers using the first depth information and the second depth information. The output image is rendered on a display of the first device.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 illustrates an example architecture where images are rendered at a remote computer and sent to a local computer such as an HMD;
FIG. 1A shows a first layer for use in compositing an image, a second layer for use in compositing the image, a cutout mask of the second layer, and an image formed by compositing the first and second layers;
FIG. 1B shows the second layer of FIG. 1A without dilation, the second layer of FIG. 1A with dilation, the result of compositing the second layer without dilation with the first layer of FIG. 1A, the result of compositing the second layer with dilation with the first layer of FIG. 1A;
FIG. 2 illustrates an example process for remote rendering performed by a remote computer;
FIG. 3 illustrates an example process for remote rendering performed by a local computer;
FIG. 4 illustrates an example process for remote rendering a layer of an image; and
FIG. 5 illustrates an exemplary computing-based device such as a rendering device or a display device.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences is accomplished by different examples.

Although the present examples are described and illustrated herein as being implemented in a remote rendering system with an HMD device, the system described is provided as an example and not a limitation. As those skilled in the art will appreciate, the present examples are suitable for application in a variety of different types of image processing systems and devices.

Remote rendering may be performed for a user device, such as a head mounted display (HMD) device, where the images to be displayed on the HMD device are generated remotely, such as on a remote cloud service, and then transmitted over a communications network to the HMD device. Remote rendering may be used for mixed-reality, virtual-reality or augmented-reality systems and devices. Remote rendering is useful because images may be processed and generated at a remote device that has capability or more resources available than the local device would be able to handle, thereby allowing rendering of complex images and scenery.

For remote rendering to perform well, it is desirable to have accurate and efficient transmission of the image from the remote service to the HMD device. Methods such as lossy streaming of full textures, utilization of depth composition and chroma key are possible but lead to artifacts being visible in the images. The inventors have recognized that the presence of artifacts at the edges of features of the rendered images, arise from various reasons such as approximations used as a result of compression and decompression, or features being rendered on image layers that are not at the correct depth for that feature, e.g. a background being rendered at the edge of a foreground object in the foreground layer.

In many examples, the remote rendering system uses lossy video compression to transmit color and depth images to the local HMD device. The inventors have recognized this leads to numerical errors in the depth values which causes a composition process to select an incorrect layer as closest to the camera for some pixels. This happens primarily around edges of objects, where the encoded depth value sharply transitions from one pixel to the next between the object depth and a background value indicating lack of content. These discontinuities are particularly difficult to encode using hardware video encoders. This problem is particularly noticeable during motion, as the set of incorrectly composited pixels changes from frame to frame, causing easily perceptible flicker.

In some approaches depth buffer dilation is used as a preprocessing step to improve efficiency when using a video encoder such as a hardware or software video encoder or other type of video encoder, and/or when using a video decoder such as a hardware or software decoder or other type of video decoder. However, this approach is incompatible with multi-layer image composition because the dilated depth values cannot be distinguished from the actual content depth values, and as such the per-pixel layer selection cannot be performed correctly.

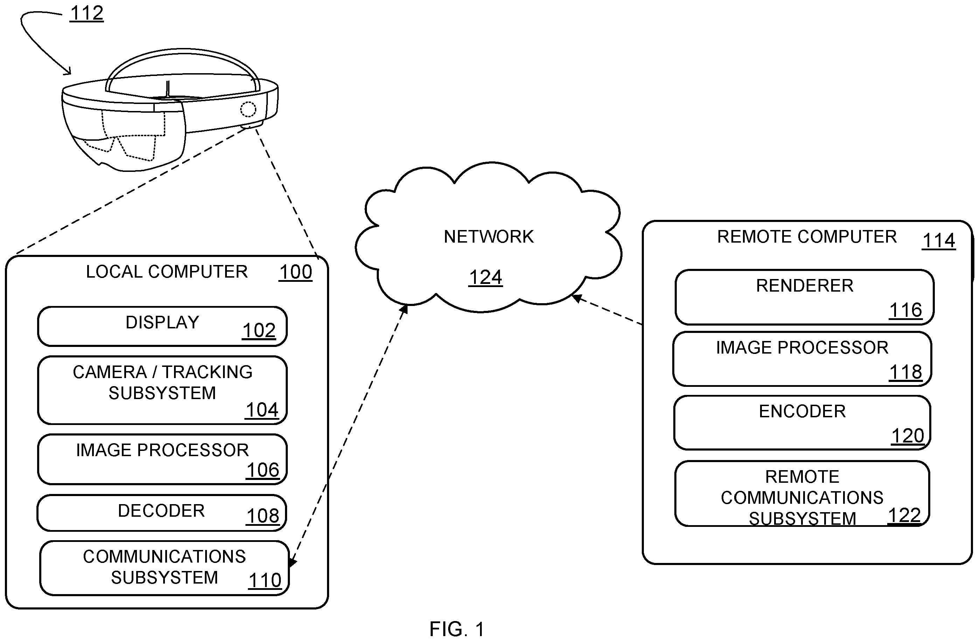

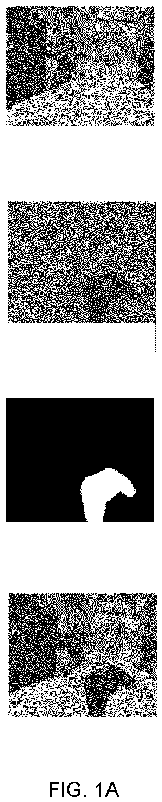

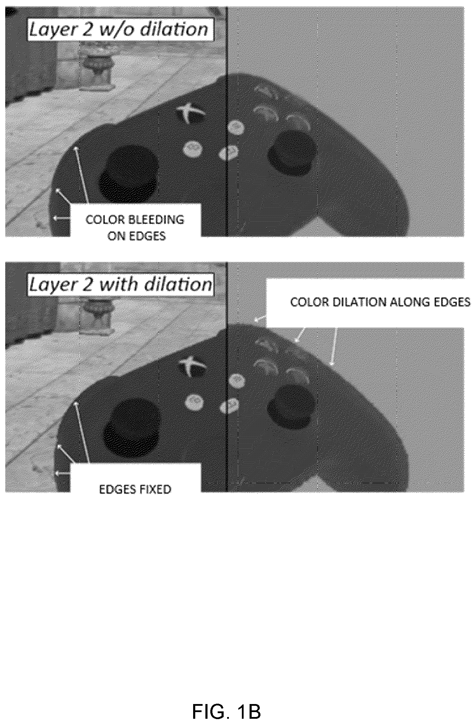

Dilation is a process of removing or ameliorating discontinuities such as depth discontinuities or color discontinuities. In one non-limiting example dilation is achieved by taking samples of depth values bordering one side of a depth discontinuity, averaging the sampled depth values, and infilling pixels adjoining the discontinuity (on the other side of the discontinuity from the side the samples were taken) using the average depth value. In this way the discontinuity shifts. Dilation may be arranged such that regions of a depth image corresponding to content in a scene are "grown" or expanded, into non-content regions. Various different ways of computing the values to infill pixels adjoining the discontinuity are possible; that is, averaging is only one example. Dilation is explained further with reference to FIG. 1A and FIG. 1B.

The inventors have developed a way whereby artifacts in multi-layer images (i.e. images composited from two or more layers) may be avoided by using one or more masks, which may be referred to as cutout masks, even where depth dilation is used as a pre-processing operation to improve efficiency. The result is a highly efficient and therefore low latency process for remote rendering of image layers which may be composited into an output image depicting a complex three dimensional (3D) scene by a local device, such as an HMD.

The remote device may generate the one or more masks and transmit the mask(s) to the HMD device. A cutout mask is a binary mask which is a two dimensional array of values such as zero or one. A zero may indicate a valid pixel location and a one may indicate an invalid pixel location (or vice versa). A valid pixel location is a location where content from a layer to be composited into an output image is to appear in the output image. An invalid pixel location is a location where content from the layer to be composited into the output image is to be absent from the output image. The choice of which pixels locations are valid and which are invalid may be computed by a process on a remote rendering computer using rules, as part of a wider process of generating the output image as part of a video game, mixed-reality application or other service.

Such cutout masks may be extracted from the depth information for each layer produced on the remote system before any quality is lost through lossy compression. The masks may be transmitted using a lossless codec to the HMD device, and thus high quality information about the valid and invalid pixel locations is conveyed to the HMD device. In some cases the mask is rendered by the remote device from images at an original resolution which is at a higher resolution than the video streamed to the HMD device, thus effective use of the available communications bandwidth is obtained without reducing the quality of edges in the composite image i.e. the output image.

When the HMD device receives the mask and the layers, it is able to use the mask to inform how it composites the layers.

In some examples, a layer comprising a color image is dilated to reduce artifacts as explained below with reference to FIG. 1B.

In some examples, the HMD device composites image layers received from different sources. The sources include but are not limited to: a camera capture of the real world or a display capture of an external display.

FIG. 1 illustrates an example architecture configured to perform remote rendering. A remote computer 114 and a user device, such as local computer 100 which may be an HMD, are in communication with each other via a network 124 such as a wireless communications network, a wide area network, the internet or any other type of communications network.

In an example, the remote rendering is performed in the remote computer 114, which is in communication with the network 124 via the remote communications subsystem 122. In an example, the remote computer 114 also comprises a renderer 116, an image processor 118 and an encoder 120. In an example the encoder 120 comprises a lossy video encoder and also a lossless video encoder. The remote computer 114 is also referred to as a remote rendering endpoint. The image processor 118 is capable of dilating depth images and is optionally able to dilate color images.

In an example, the user device is a head mounted display (HMD) device 112. The HMD device 112 comprises a local computer 100 which is in communication with the network 124 via the communication subsystem 110. The computer 100 of the HMD device 112 comprises a display 102, a camera and tracking system 104, an image processor 106 and a decoder 108. In an example, the local computer 100 comprises or is in communication with an API to display images and/or video on the display 102. The decoder is a video decoder such as a hardware or software video decoder. The image processor 106 has functionality to compute composite images from a plurality of images referred to as layers, and by taking into account one or more cutout masks.

With remote rendering, the remote computer 114 communicates with the HMD device 112 over the network 124. In some examples, the remote computer 114 is a cloud computer or a cloud based server operating in a cloud environment. In some examples, the HMD device 112 is a mixed-reality (MR), augmented-reality (AR) or virtual-reality (VR) headset.

Alternatively, or in addition, the functionality of the local computer 100 and the remote computer 114 described herein is performed, at least in part, by one or more hardware logic components. For example, and without limitation, illustrative types of hardware logic components that are optionally used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Graphics Processing Units (GPUs), video encoders, video decoders.

A method of remote rendering comprises generating a first layer of an output image and generating first depth information for the first layer. Having depth information is useful for late stage reprojection at an HMD. Having a first layer is useful because it can be composited with one or more other layers at the HMD to form a composite image. The method comprises generating a second layer of the output image, wherein the second layer comprises valid pixels and invalid pixels, and comprises generating second depth information for the second layer. Knowing which pixel locations are valid and which are invalid pixel locations is helpful to inform composition of the layers at an HMD. The method comprises generating dilated depth information, comprising dilating the second depth information. Dilating the depth information improves efficiency because depth discontinuities are reduced and thus encoding the depth information can be done more efficiently and with lower latency than without using dilation. The method comprises generating a mask using the second depth information. The mask is generated from the second depth information which is not dilated. Using the mask informs composition of an output image at an HMD, for example by indicating valid pixels which are pixels that have not been dilated and indicating pixels that have dilated depth values and are invalid so should not be used when compositing the image. The method comprises transmitting the first depth information of the first layer, the dilated depth information of the second layer and the mask to a device. Transmitting the dilated depth information for the second layer and the mask to the device is an efficient way of conveying the depth information and geometry of the second layer accurately so that the device may composite an image without artifacts on the edges of features in the second layer.

A method for compositing an image comprises receiving first depth information for a first layer from a second device. The method comprises receiving dilated depth information for a second layer from the second device. By using multiple layers, there is versatility since different reprojection processes, such as different late stage reprojection, may be performed on each layer. Using dilated depth information brings efficiency of video encoding and decoding. The method comprises receiving a mask for the second layer from the second device. The mask is used to efficiently and accurately identify whether depth values in the dilated depth information are located in valid or invalid pixel locations. The method comprises compositing an output image from the first and second layers where the compositing is informed by the mask. By compositing the image at, for example, a HMD device, instead of at the remote rendering endpoint, there is versatility since image content bespoke to an individual HMD wearer may be composited from a video stream. Using multiple layers gives the versatility to do different late stage reprojection on the layers. In an example, a hand held object in one layer may be reprojected using a pose of the hand held object as well as a pose of the HMD. By using the mask, artifacts are avoided in the composite output image. The method comprises rendering the output image. The output image is presented to be viewed by the user of the device.

FIG. 1A shows, from top to bottom, a first layer for use in compositing an image, a second layer for use in compositing the image, a cutout mask of the second layer, and an image formed by compositing the first and second layers. In the example of FIG. 1A, Layer 1 is a color image depicting a 3D scene although to meet patent office requirements it is shown in black and white. Layer 2 shows a controller, such as a hand held game controller of a player, against a plain background. In this example, layer 1 does not have a cutout mask. Layer 2 has a cutout mask (shown in the third square from the top of FIG. 1A) which marks all valid pixels in that layer. The cutout mask comprises a white region depicting the controller against a black background. The valid pixels in layer 2 are the white pixels i.e. the pixels depicting the controller.

An HMD receives layer 1, layer 2 and the cutout mask of layer 2. The HMD carries out a composition process. Composition starts by reprojecting Layer 1. The reprojection is optional and acts to transform the layer 1 image according to a change between a 3D position and orientation of a camera viewpoint used when rendering layer 1 at the remote computer, and a current 3D position and orientation of the HMD. The reprojection takes into account depth of the surfaces depicted in layer 1 from the camera viewpoint. The depth may be transmitted to the HMD together with layer 1.

The composition process at the HMD composites layer 2 on top of Layer 1 using the cutout mask for Layer 2. In an example, pixels from Layer 2 are only taken and put into the output image (top right) if marked in the cutout mask as being valid pixels.

FIG. 1B shows a portion of the second layer of FIG. 1A without dilation (top right), a portion of the second layer of FIG. 1A with dilation (bottom right), a portion of the result of compositing the second layer without dilation with the first layer of FIG. 1A (top left), and a portion of the result of compositing the second layer with dilation with the first layer of FIG. 1A (bottom left). Color dilation makes the objects in Layer 2 larger by expanding their color. This avoids the background color of Layer 2 bleeding into the composed image. Thus color dilation ameliorates artifacts in the composited output image.

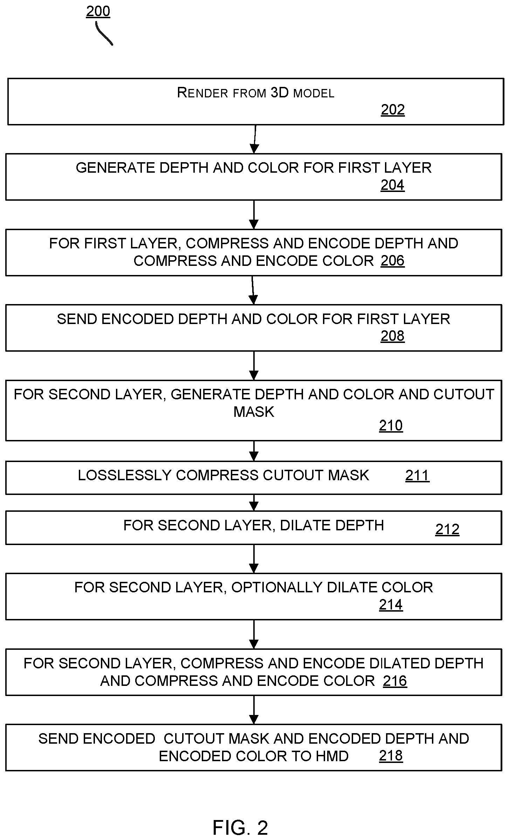

FIG. 2 is a schematic diagram 200 of an example remote rendering process performed by a remote computer 114.

At block 202, the remote computer 114 renders 202 from a 3D model to generate 204 a depth image and a color image of a first layer of a composite output image.

At block 206, the remote computer 114 compresses and encodes the depth image and the color image of the first layer. At block 208, the remote computer 114 sends the encoded depth image and the encoded color image to the local computer 100.

At block 210, the remote computer 114 generates or receives from another source a second layer. The second layer comprises a second layer depth image (also referred to as a depth buffer), a second layer color image, and a cutout mask. The cutout mask indicates which pixel locations of the second layer comprise content and so are valid pixels and which pixel locations of the second layer comprise background and so are invalid pixels. The cutout mask is computed from the depth image corresponding to the second layer before dilation is carried out. Thus the cutout mask is accurate. The remote computer losslessly 211 compresses the cutout mask. Thus accuracy of the cutout mask is unaffected.

The remote computer dilates 212 the depth of the second layer after the cutout mask has been computed. The dilation acts to reduce the discontinuities in the depth image by infilling pixels in the background region of the depth image with depth values similar to the depth values in a foreground region of the depth image. Dilation of the depth of the second layer improves efficiency of encoding using a video encoder. The color image of the second layer is optionally dilated 214 by the remote computer. Dilating the color image of the second layer helps to reduce artifacts in the composite image.

The remote computer compresses and encodes 216 the dilated depth of the second layer and compresses and encodes the color image of the second layer. Because the depth is dilated depth the encoding using a video encoder is significantly more efficient than without using dilation. The remote computer sends 218 the cutout mask (in lossless encoded form), the encoded depth image of the second layer, and the encoded color image (which is optionally dilated) of the second layer, to the HMD. Since the items being sent are encoded the sending is achievable with low latency even over wireless connections.

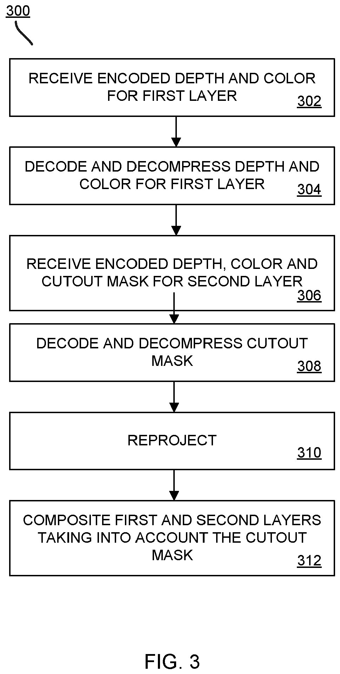

FIG. 3 is a schematic diagram 300 of an example remote rendering process performed by a local computer 100 such as an HMD 112.

At block 302, the local computer 100 receives the encoded depth image for the first layer and the encoded color image for the first layer. At block 304, the local computer 302 decodes and decompresses the depth image for the first layer and the color image for the first layer.

At block 306, the local computer 100 receives the dilated depth image of the second layer, the color image of the second layer (which has optionally been dilated) and the cutout mask for the second layer. At block 308, the local computer 100 decodes and decompresses the dilated depth information and decompresses the mask. The decoding in operations 304 and 306 is performed using a video decoder. Any suitable hardware or software video decoder is used. The mask is decoded using a lossless decoder which is a hardware or software lossless decoder. At block 310, the local computer 100 optionally reprojects first layer and the second layer using depth informed reprojection. The reprojection process transforms the color image of the first and second layers to take into account change between a current or anticipated pose of the HMD and a pose of a virtual camera used when rendering the color images of the first and second layers. The transformation takes into account the depth of the surfaces depicted in the first and second layers. In some examples, the reprojection is a controller reprojection, motion reprojection or other type of reprojection. By using multiple layers for the composite image, there is versatility since different reprojection processes, such as different late stage reprojection, may be performed on each layer. In a non-limiting example, one of the layers depicts a hand held object such as a game controller, which is reprojected differently to other layers of the composite image because the controller position depends on the head pose and the controller pose..

The local computer 100 composites 312 the first and second layers taking into account the cutout mask. For each pixel location of an output image the local computer inspects the value in the cutout mask at that location. If the value indicates a valid pixel location the local computer 100 obtains the color of the pixel in the second layer and puts that color into the corresponding pixel location in the output image. If the value indicates an invalid pixel location the local computer obtains the color of the pixel in the first layer and puts that color into the corresponding pixel location in the output image. Because the cutout mask was losslessly encoded and because it was computed from the depth before dilation, it is highly accurate at indicating which pixel locations are valid and which are not. Thus the output image is free from artifacts that otherwise arise.

Where the color image of the second layer was dilated, the output image is free from artifacts that result from valid pixels from the second layer appearing in the composite image with inappropriate color.

The local computer 100 does not require a large amount of processing power and resources, relative to the remote computer, and only requires the processing power and resources for decoding, reprojecting the mask and compositing the layers.

The result of operation 312 is an output image which has been composited from the first and second layers. The local computer triggers display of the output image at the HMD.

In some examples, the local device 100 composites image layers from multiple sources. For example, the local device 100 receives data for an image captured by a camera. In some examples, the image captured by a camera is a photographic frame extracted from a video feed from the camera. In some examples, the image captured by a camera is assigned a maximum depth value, in order that the images generated by the remote rendering device are to be overlayed on top of the camera image. In this example, the image from the camera will only be visible for pixels where there are no valid pixels in all other layers being used to composite the final image, or where there are only pixels which are assigned a transparency value or alpha channel. In an example the camera image will be rendered to be at least partially visible in the output image when the transparency value or alpha channel denotes that a pixel of an overlapping layer is not fully opaque.

In some examples, an image or video feed from another source is also composited into the output image. For example, the display state of an external monitor may be captured and included in the composite image. In an example, the captured display image is assigned a depth value such that it is rendered in front of one or more of the layers and rendered behind one or more other layers.

In some examples, the remote device determines that the final composite image comprises layers from multiple sources. In some examples, the remote device obtains, receives or captures the image layers from the multiple sources, and produces dilated depth information and masks for each image from each source as in methods 200 and 300.

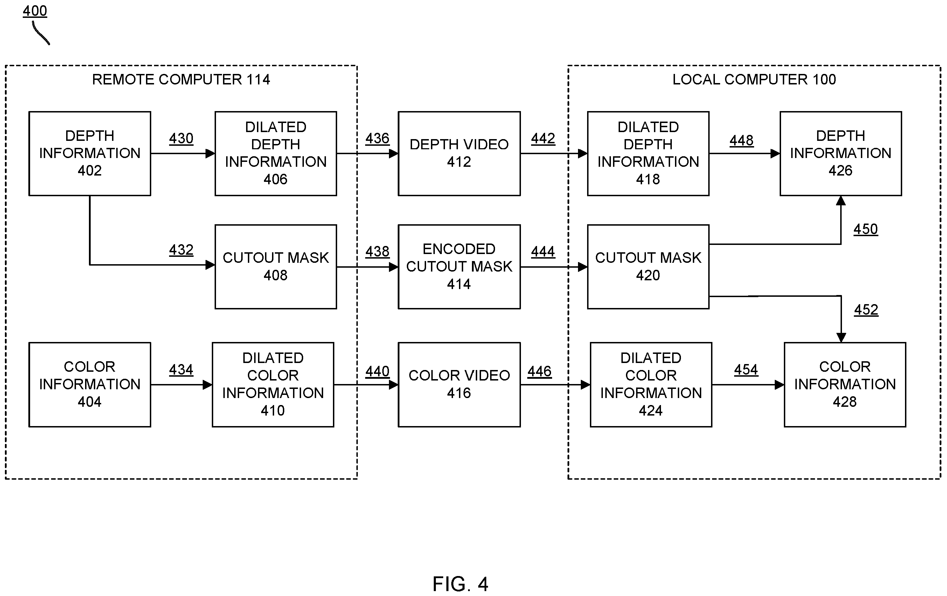

FIG. 4 illustrates an example process for processing depth and color in an image layer. The second layer described in relation to the methods 200 and 300 is an example of the image layer. In some examples, the image layer only contains features that are in that layer for valid pixels, wherein the rest of that layer is marked as not having valid pixels.

The remote computer 114 obtains depth information 402 and color information 404 for the features in the image layer. The depth information 402 comprises depth pixel values for each valid pixel of the image layer, and the color information 404 comprises color pixel values for each valid pixel of the image layer. The remote computer 114 generates 432 the cutout mask 408 from the depth information 402. In an example, the remote computer 114 extracts the cutout mask 408 from content pixels in the image layer. In some examples, the cutout mask 408 indicates valid pixels in the image layer. The remote computer 114 dilates 430 the depth information 402 to obtain dilated depth information 406. In some examples, the remote compute 114 dilates 434 the color information 404 to obtain dilated color information 410. In some examples, the dilated depth information 406 comprises infilled pixels from the dilating 430. In some examples, the dilated color information 410 comprises infilled pixels from the dilating 434. The infilled pixels are invalid pixels according to the cutout mask with dilated depth/color values. The cutout mask 408 is not dilated and is not generated from the dilated information.

The remote computer 114 encodes 436 the dilated depth information 406 to generate a depth video stream 412, which is transmitted to the local computer 100. In an example, the remote computer downsamples the dilated depth information 406 before encoding the downsampled dilated depth information into a depth video stream. In some examples, the mask 408 is at a higher resolution than the depth video stream 412, and this reduces video codec requirements without sacrificing the edge quality of the final composite image.

In some examples, the remote computer 114 encodes 436 the dilated color information 410 to generate a color video stream 416, which is transmitted to the local computer 100. In an example, the remote computer downsamples the dilated color information 410 before encoding the downsampled dilated color information into a color video stream. In some examples, the mask 408 is at a higher resolution than the color video stream 416, and this reduces video codec requirements without sacrificing the edge quality of the final composite image.

The remote computer 114 performs lossless encoding 438 on the cutout mask 408 to obtain an encoded cutout mask 414. In some examples, the remote computer 114 performs a lossless compression on the cutout mask to generate the encoded cutout mask 414.

The local computer 100 receives the depth video 412, the encoded cutout mask 414, and in some examples, the color video 416.

The local computer 100 decodes 442 the depth video to obtain the dilated depth information 418. The local computer 100 decodes and/or decompresses 444 the encoded cutout mask to obtain the cutout mask 420. In some examples, the local computer 100 decodes 446 the color video to obtain dilated color information 424.

The local computer 100 applies 450 the cutout mask 420 to remove infilled pixels in the dilated depth information 418, to obtain final depth information 426. For example, the local computer 100 removes portions of the dilated depth information 418 for the image layer which correspond to pixels not included in the cutout mask 414 to generate final depth information 426 for the image layer. In other words, the local computer 100 removes portions of the dilated depth information 418 which do not correspond to pixels indicated by the cutout mask 414, and the final depth information 426 is different to the original depth information 402 generated at the remote computer 114. In some examples, the local computer 100 upscales 448 the dilated depth information 418 to obtain the final depth information 426 before or after applying the cutout mask 420. The final depth information 426 is used by the local computer 100 when compositing the image layer with other layers. For example, the depth value of each pixel of the final depth information 426 is compared with the depth values of all layers with valid pixels in that pixel position, and the pixel with the lowest depth value will be selected to be rendered in the final composite image.

In some examples, the local computer 100 applies 452 the cutout mask 420 to remove infilled pixels in the dilated color information 424, to obtain final color information 428. For example, the local computer 100 removes portions of the dilated color information 424 for the image layer which correspond to pixels not included in the cutout mask 414 to generate final color information 428 for the image layer. In other words, the local computer 100 removes portions of the dilated color information 424 which do not correspond to pixels indicated by the cutout mask 414, and the final color information 428 is different to the original color information 404 generated at the remote computer 114. In some examples, the local computer 100 upscales 448 the dilated color information 424 to obtain the final color information 428 before or after applying the cutout mask 420. The final color information 428 is used by the local computer 100 when compositing the image layer with other layers.

The local computer 100 or HMD device composites the output image by compositing the image layer with another layer. For example, the compositing comprises, for each pixel of the output image: comparing a first depth value for the pixel from depth information for the other layer with a second depth value for the pixel from the depth information of the image layer. The local computer 100 or HMD device assigns a pixel of the other layer corresponding to the pixel of the output image if the first depth value is smaller than the second depth value or the second depth value is invalid. The local computer 100 or HMD device assigns a pixel of the image layer corresponding to the pixel of the output image if the second depth value is smaller than the first depth value. In an example the local computer 100 or HMD device sends the output image for display to a wearer of the HMD.

By using the dilated depth information, artifacts resulting from discontinuities in depth values at the edges of features is avoided. The cutout masks helps with this by enabling the local computer to identify which pixels with the dilated depth values are valid, and which pixels with depth values are invalid, to remove the invalid pixels so that the shape of the original feature is maintained while avoiding depth artifacts on the edges from layers being rendered in an incorrect order when the layer is composited with other layers.

Additionally, when dilated color information is also used, to avoid artifacts of other colors showing at the edges of features. For example, invalid pixels in the color information for the layer may be depicted with a specific color (such as black) at the remote device. Using color dilation avoids the color used to depict invalid pixels from showing at the edges of the features as an artifact. The cutout mask helps to identify which pixels with dilated color values are valid or invalid, so that invalid pixels are removed. Using the dilated color information with the cutout masks allows the shape of the original feature to be maintained while avoiding color artifacts on the edges of the features when it is composited with other layers.

While the process was described with color and depth information, these are non limiting examples of the image information that may be generated and conveyed by the remote device. Other image information that are processed as described in relation to FIGs. 2-4 include alpha channels/transparency data, among other examples. For example, a cutout mask may indicate transparent or non-transparent pixels in the layer.

In some examples, more than one type of mask is generated. For example, more than one color mask and/or more than one depth mask is generated. In some examples, when more than one mask is used, each mask may represent the geometry of the corresponding layer in different ways. For example, a first color mask and/or a first depth mask is generated for features with simple geometry, where the color and depth shapes is easily represented mathematically, and a second color mask and/or a second depth mask is generated for features with more complex geometry that are cannot be represented mathematically. By separating geometries depending on how they can be most efficiently and accurately be represented, the amount of data to be streamed is reduced while ensuring that the data is accurate.

In some examples, the methods 200, 300 and 400 are performed more than once for each image to be displayed on the HMD device. For example, in an HMD device which comprises two displays, such as one for each eye of the user, the methods 200, 300 and 400 are performed for each display. In an example, the two displays will display images that represent the shifted viewpoint of each eye of the user to give the user perception of viewing a three dimensional scene. In an example the two displays show laterally shifted versions of an image, to compensate for binocular disparity in the eyes of a user.

The combination of dilation and a losslessly encoded cutout mask enables the HMD to operate in an unconventional manner to achieve efficient generation of composite images which do not have artifacts as disclosed herein.

The combination of the use of dilation of depth discontinuities and the use of an accurate cutout mask improves the functioning of the remote rendering computer.

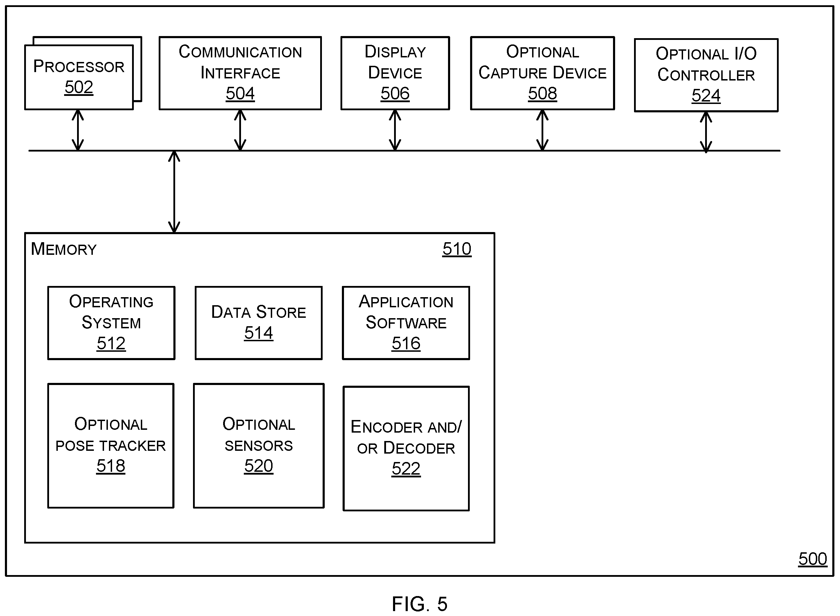

FIG. 5 illustrates various components of an exemplary computing-based device 500 which are implemented as any form of a computing and/or electronic device, and in which a rendering device or a display device are implemented in some examples. In an example where the computing-based device is a display device, the computing-based device is a HMD device, a smart phone, a tablet computer or other display device. In an example where the computing-based device is a rendering device, it is a server such as a cloud server or other server, or a companion computing device of an HMD device, or another computing device which has greater resources than the display device.

Computing-based device 500 comprises one or more processors 502 which are microprocessors, controllers or any other suitable type of processors for processing computer executable instructions to control the operation of the device in order to contribute to remote rendering and projection of images. In some examples, for example where a system on a chip architecture is used, the processors 502 include one or more fixed function blocks (also referred to as accelerators) which implement a part of the methods of FIGs. 2, 3 and 4 in hardware (rather than software or firmware). Where the computing-based device 500 is a display device it optionally comprises sensors 520 such as an inertial measurement unit IMU, an accelerometer, a gyroscope, a global positioning system. The computing-based device 500 optionally comprises a pose tracker 518 to compute a 3D position and orientation of the computing based device. The pose tracker 518 is any conventional pose tracker such as an IMU, accelerometer, gyroscope, global positioning system or pose tracker using captured image data depicting an environment of the computing-based device 500. Data store 514 holds pose data, depth images, color images, cutout masks, sensor data or other data. Platform software comprising an operating system 512 or any other suitable platform software is provided at the computing-based device to enable application software 516 to be executed on the device. The computing-based device comprises an encoder and/or decoder 522 such as a video encoder and a video decoder.

The computer executable instructions are provided using any computer-readable media that is accessible by computing based device 500. Computer-readable media includes, for example, computer storage media such as memory 510 and communications media. Computer storage media, such as memory 510, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium does not include propagating signal. Although the computer storage media (memory 510) is shown within the computing-based device 500 it will be appreciated that the storage is, in some examples, distributed or located remotely and accessed via a network or other communication link (e.g. using communication interface 504). The computing-based device 500 has an optional capture device 508 such as a depth camera, color camera, video camera, web camera or other image capture device.

The computing-based device 500 also optionally comprises an input/output controller 524 arranged to output display information to a display device 506 which is separate from or integral to the computing-based device 500. The display information may provide a graphical user interface. The input/output controller 524 is also arranged to receive and process input from one or more devices, such as a user input device such as a mouse, keyboard, camera, microphone or other sensor. In some examples the user input device detects voice input, user gestures or other user actions and provides a natural user interface (NUI). In an embodiment the display device 506 also acts as the user input device if it is a touch sensitive display device. The input/output controller 524 outputs data to devices other than the display device in some examples, e.g. a locally connected printing device (not shown in FIG. 5).

Any of the input/output controller 524, display device 506 and the user input device may comprise NUI technology which enables a user to interact with the computing-based device in a natural manner, free from artificial constraints imposed by input devices such as mice, keyboards, remote controls and the like. Examples of NUI technology that are provided in some examples include but are not limited to those relying on voice and/or speech recognition, touch and/or stylus recognition (touch sensitive displays), gesture recognition both on screen and adjacent to the screen, air gestures, head and eye tracking, voice and speech, vision, touch, gestures, and machine intelligence. Other examples of NUI technology that are used in some examples include intention and goal understanding systems, motion gesture detection systems using depth cameras (such as stereoscopic camera systems, infrared camera systems, red green blue (rgb) camera systems and combinations of these), motion gesture detection using accelerometers/gyroscopes, facial recognition, three dimensional (3D) displays, head, eye and gaze tracking, immersive augmented reality and virtual reality systems and technologies for sensing brain activity using electric field sensing electrodes (electro encephalogram (EEG) and related methods).

In an example, there is provided a method, comprising: generating a first layer of an image; generating first depth information for the first layer; generating a second layer of the image; generating second depth information for the second layer; generating dilated depth information, comprising dilating the second depth information; generating a mask using the second depth information; and transmitting the first depth information of the first layer, the dilated depth information of the second layer and the mask. Alternatively or in addition to the other examples described herein, examples include any combination of the following:
Clause A. A method implemented on a first device, comprising:
   generating a first layer of an output image;
   generating first depth information for the first layer;
   generating a second layer of the output image, wherein the second layer comprises valid pixels and invalid pixels;
   generating second depth information for the second layer;
   generating dilated depth information, comprising dilating the second depth information;
   generating a mask using the second depth information;
   transmitting the first depth information of the first layer, the dilated depth information of the second layer and the mask to a second device.
Clause B. The method of clause A, wherein the mask indicates valid pixels of the second layer.
Clause C. The method of clause A or clause B, further comprising:
   generating color information for the second layer;
   generating dilated color information, comprising dilating the color information for the second layer;
   transmitting the dilated color information to the second device.
Clause D. The method of any of clauses A to C, wherein the transmitting comprises transmitting the dilated depth information in a video stream.
Clause E. The method of clause D, wherein the mask is at a higher resolution than the video stream.
Clause F. The method of any of clauses A to E, wherein the transmitting comprises transmitting the mask after the mask has been losslessly compressed.
Clause G. The method of any of clauses A to F, wherein the transmitting comprises transmitting the dilated depth information after compressing the dilated depth information.
Clause H. The method of any of clauses A to G, further comprising:
   receiving a second image from a third device;
   generating third depth information for the second image;
   generating second dilated depth information, comprising dilating the third depth information;
   generating a second mask using the third depth information;
   transmitting the second dilated depth information and the second mask.
Clause I. The method of any of clauses A to H, wherein the mask indicates transparent pixels In the second layer.
Clause J. A method implemented on a first device, comprising:
   receiving first depth information for a first layer from a second device;
   receiving dilated depth information for a second layer from the second device;
   receiving a mask for the second layer from the second device;
   generating second depth information for the second layer using the dilated depth information and the mask;
   compositing an output image using the first depth information and the second depth information; and
   rendering the output image on a display of the first device.
Clause K. The method of clause J, further comprising:
   receiving dilated color information for the second layer from the second device;
   generating color information for the second layer using the dilated color information and the mask;
   wherein the rendering comprises using the color information for the second layer.
Clause L. The method of clause J or clause K, wherein the generating color information comprises removing portions of the dilated color information which do not correspond to pixels indicated by the mask.
Clause M. The method of any of clauses J to L, wherein the mask indicates valid pixels in the second layer.
Clause N. The method of any of clauses J to M, wherein the mask indicates transparent pixels in the second layer.
Clause O. The method of any of clauses J to N, wherein the generating the second depth information comprises:
   removing portions of the dilated depth information which do not correspond to pixels indicated by the mask.
Clause P. The method of any of clauses J to O, wherein the compositing comprises, for each pixel of the output image:
   comparing a first depth value for the pixel from the first depth information with a second depth value for the pixel from the second depth information; and
   assigning a first pixel of the first layer or a second pixel of the second layer to the pixel of the output image.
Clause Q. The method of clause P, wherein the assigning comprises:
   assigning the first pixel if the first depth value is smaller than the second depth value or the second depth value is invalid; or
   assigning the second pixel if the second depth value is smaller than the first depth value.
Clause R. The method of any of clauses J to Q, wherein receiving the first depth information comprises:
   receiving second dilated depth information for the first layer from the second device;
   receiving a second mask for the first layer from the second device;
   generating the first depth information using the second dilated depth information and the second mask.
Clause S. The method of any of clauses J to R, further comprising receiving third depth information for a third layer, wherein the third layer is from a third device, and wherein the compositing comprises the output image further comprises using the third depth information.
Clause T. A head mounted display device, comprising:
   at least one processor;
   memory comprising instructions which, when executed by the at least one processor, cause the head mounted display device to:
      receive first depth information for a first layer from a remote rendering endpoint;
      receive a cutout mask and dilated depth information for a second layer from a remote rendering endpoint, wherein the cutout mask indicates valid pixels in the second layer;
      remove portions of the dilated depth information for the second layer which correspond to pixels not included in the cutout mask to generate second depth information for the second layer;
      composite the output image, wherein the compositing comprises, for each pixel of the output image:
         comparing a first depth value for the pixel from the first depth information with a second depth value for the pixel from the second depth information;
         assigning a first pixel of the first layer corresponding to the pixel if the first depth value is smaller than the second depth value or the second depth value is invalid, or assigning a second pixel of the second layer corresponding to the pixel if the second depth value is smaller than the first depth value;
      render the output image on an integrated display of the head mounted display device.

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program is embodied on a computer readable medium. The software is suitable for execution on a parallel processor or a serial processor such that the method operations is carried out in any suitable order, or simultaneously.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions is carried out by a dedicated circuit, such as a digital signal processor (DSP), programmable logic array, or the like.

Any range or device value given herein is extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein is carried out in any suitable order, or simultaneously where appropriate. Additionally, individual blocks are deleted from any of the methods without departing from the scope of the subject matter described herein. Aspects of any of the examples described above is combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications is made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. A method performed by a first device, comprising:
generating a first layer of an output image;
generating first depth information for the first layer;
generating a second layer of the output image, wherein the second layer comprises valid pixels and invalid pixels;
generating second depth information for the second layer;
generating dilated depth information, comprising dilating the second depth information;
generating a mask using the second depth information; and
transmitting the first depth information of the first layer, the dilated depth information of the second layer and the mask to a second device.

2. The method of claim 1, further comprising:
generating color information for the second layer;
generating dilated color information, comprising dilating the color information for the second layer;
transmitting the dilated color information to the second device.

3. The method of any preceding claim, wherein the transmitting comprises transmitting the dilated depth information in a video stream.

4. The method of claim 3, wherein the mask is at a higher resolution than the video stream.

5. The method of any preceding claim, wherein the transmitting comprises transmitting the mask after the mask has been losslessly compressed.

6. A method performed by a first device, comprising:
receiving first depth information for a first layer from a second device;
receiving dilated depth information for a second layer from the second device;
receiving a mask for the second layer from the second device;
generating second depth information for the second layer using the dilated depth information and the mask;
compositing an output image from the first layer and the second layer using the first depth information and the second depth information; and
rendering the output image on a display of the first device.

7. The method of claim 6, further comprising:
receiving dilated color information for the second layer from the second device;
generating color information for the second layer using the dilated color information and the mask;
wherein the rendering comprises using the color information for the second layer.

8. The method of claim 7, wherein the generating color information comprises removing portions of the dilated color information which do not correspond to pixels indicated by the mask.

9. The method of any of claims 6 to 8, wherein the mask indicates valid pixels in the second layer.

10. The method of any of claims 6 to 9, wherein the generating the second depth information comprises:
removing portions of the dilated depth information which do not correspond to pixels indicated by the mask.

11. The method of any of claims 6 to 10, wherein the compositing comprises, for each pixel of the output image:
comparing a first depth value for the pixel from the first depth information with a second depth value for the pixel from the second depth information; and
assigning a first pixel of the first layer or a second pixel of the second layer to the pixel of the output image.

12. The method of claim 11, wherein the assigning comprises:
assigning the first pixel if the first depth value is smaller than the second depth value or the second depth value is invalid; or
assigning the second pixel if the second depth value is smaller than the first depth value.

13. The method of any of claims 6 to 12, wherein receiving the first depth information comprises:
receiving second dilated depth information for the first layer from the second device;
receiving a second mask for the first layer from the second device;
generating the first depth information using the second dilated depth information and the second mask.

14. The method of any of claims 6 to 13, wherein the mask indicates transparent pixels in the second layer.

15. A head mounted display device, comprising:
at least one processor;
memory comprising instructions which, when executed by the at least one processor, cause the head mounted display device to:
receive first depth information for a first layer from a remote rendering endpoint;
receive a cutout mask and dilated depth information for a second layer from a remote rendering endpoint, wherein the cutout mask indicates valid pixels in the second layer;
remove portions of the dilated depth information for the second layer which correspond to pixels not included in the cutout mask to generate second depth information for the second layer;
composite the output image, wherein the compositing comprises, for each pixel of the output image:
comparing a first depth value for the pixel from the first depth information with a second depth value for the pixel from the second depth information;
assigning a first pixel of the first layer corresponding to the pixel if the first depth value is smaller than the second depth value or the second depth value is invalid, or assigning a second pixel of the second layer corresponding to the pixel if the second depth value is smaller than the first depth value;
render the output image on an integrated display of the head mounted display device.
